# EUROPEAN PATENT SPECIFICATION

(11) **EP 3 758 448 B1**
(45) Date of publication and mention of the grant of the patent: **21.09.2022**
(21) Application number: 19182573.6
(22) Date of filing: 26.06.2019
(51) Int. Cl.: H05B 47/19

(54) **SELF-ADAPTIVE LIGHTING CONTROL**
SELBSTADAPTIVE BELEUCHTUNGSSTEUERUNG
COMMANDE D'ÉCLAIRAGE AUTO-ADAPTATIVE

(43) Date of publication of application: 30.12.2020
(73) Proprietor: Helvar Oy Ab, 02150 Espoo (FI)
(72) Inventor: AHOLA, Jukka, 02150 ESPOO (FI); JUSLÉN, Henri, 02150 ESPOO (FI); SEPPONEN, Laura, 02150 ESPOO (FI); VESTERINEN, Matti, 02150 ESPOO (FI)
(74) Representative: Berggren Oy

(56) References cited:
- EP-A1- 2 919 562
- US-B1- 10 021 771

## Description

### TECHNICAL FIELD

The example and non-limiting embodiments of the present invention relate to self-adaptive control of a luminaire.

### BACKGROUND

In many scenarios, a luminaire is controlled at least partially based on presence of one or more persons in the space illuminated by the luminaire such that the lights are switched (and kept) on while presence of one or more persons in the space is detected and switched (and kept) off while no persons are detected in the space. In a typical solution in this regard, a control entity receives respective sensor signals from one or more passive infrared (PIR) sensors, determines occupancy or non-occupancy accordingly, and switches/keeps the lights on (at a normal light output level) in response to occupancy and switches/keeps the lights off (or at another low light output level) in response to non-occupancy.

Modern lighting control typically may further employ sensors of other type as further basis for the lighting control. As an example in this regard, one or more light sensors may be arranged in the space illuminated by the luminaires of the lighting system and the control entity may set or adjust the lighting level at least partially based on observed light level in the space indicated in the respective sensor signals obtained from the one or more light sensors.

Sensor signals such as ones conveying the occupancy information and/or the light level information provide valuable control information that, on one hand, enables adjusting the light output of the luminaire such that sufficient light level is provided in the space in view of current occupancy of the space, while on the other hand enables energy conservation via reducing the light output of the luminaire when no occupancy in the space is detected and/or when the light level is sufficient even without substantial light output from the luminaire.

A traditional solution for lighting control that at least partially relies on the sensor information involves usage of a control entity provided with preprogrammed control logic or control algorithm that in the course of its operation reacts e.g. to respective sensor signals from a presence sensor and/or a light sensor in a predetermined manner, which is typically defined e.g. via manual configuration carried out upon installation of the control entity and the luminaire. This enables a control entity to adjust the light output of the luminaire it serves to control such that expected requirements and/or characteristics for lighting in the space illuminated by the luminaire are accounted for to some extent, while quite naturally such preprogrammed control logic is unable to account for actually encountered characteristics of the space in the course of operation of the luminaire. Moreover, in many installations the overall lighting arrangement may involve a high number of luminaires that each involve a respective control entity that serves to control respective luminaire. Hence, the number of luminaires and/or the physical locations in which the luminaires and their control entities are installed may make their manual configuration inconvenient or even (practically) impossible, thereby increasing the risk of misconfiguration and, consequently, compromised lighting performance e.g. in terms of insufficient light level and/or excessive energy consumption.

In a more advanced solution, the control entity of a luminaire is able to automatically or autonomously adapt its preprogrammed control logic based on information obtained from its operating environment e.g. information received from other luminaires in vicinity via a wireless communication link and/or a wireless communication network. Such information received from the other luminaires may be referred as status information and it may involve, for example, sensor information captured by and received from another luminaire of the lighting arrangement and/or operational information pertaining to actions (e.g. switching lights on or off) carried out by another luminaire of the lighting arrangement. Hence, a first luminaire of the lighting arrangement may, in the course of its operation, learn patterns or sequences in the status information that typically precede the first luminaire taking a certain lighting control action (e.g. switching the lights on or off in response to a respective change in the sensor signal received from a local presence sensor) and, consequently, the first luminaire may adapt its preprogrammed control logic into one that (also) responds to detecting such pattern or sequence by taking the certain action or initiating a suitable preparatory action, thereby enabling the certain action already before the local presence sensor has detected occupancy. Examples of such a self-adjustment operation of a luminaire are disclosed in the European patent publications no. 2919562 and no. 3171674.

As a concrete example in this regard, we may consider a first luminaire and a second luminaire installed in proximity of each other e.g. in a corridor, in a room, an open office, etc. In such a setting, the control entity of the first luminaire may learn that reception of information indicating that the second luminaire has switched the light on (e.g. due to the local presence sensor of the second luminaire having indicated occupancy after a period of non-occupancy) is frequently followed by the presence sensor of the first luminaire changing its state from non-occupancy to occupancy and, consequently, the first luminaire switching the light on. After having learned such a chain of events, the first luminaire may adapt its operation such that it switches the light on already in response to receiving an indication of the second luminaire having switched the light on, thereby (possibly) switching the light on already before the presence sensor of the first luminaire detects occupancy.

While self-adaptation of the above-described kind enables a well-working approach for a luminaire to autonomously adjust its operation according to characteristics of its operating environment and, in particular, changes thereof independently of any central control (or lack thereof), continuous development lighting solutions results in increased versatility of lighting control options and, consequently, even more sophisticated autonomous or partially autonomous self-adjustment techniques for light control are considered advantageous.

In related art, EP 2919562 A1 discloses a technique for controlling a luminaire using control means preprogrammed to cause the luminaire to carry out a predefined action as a response to an occurrence of a predefined triggering condition. The technique comprises storing, into a memory, status indications received in status indication messages from the other devices, analyzing the stored status indications in an attempt to identify a sequence of one or more status indications that repeatedly precede an occurrence of said predefined triggering condition, and reprogramming, in response to identifying a sequence of status indications that repeatedly precede an occurrence of said predefined triggering condition, the control means to cause the luminaire to initiate or to carry out a preparatory action for carrying out said predefined action as a response to reception of said identified sequence of status indications.

### SUMMARY

It is an object of the present invention to provide a technique that facilitates a control device serving to control light output from a luminaire automatically and autonomously adapting its preprogrammed operation in response to information obtained from its operating environment.

According to an example embodiment, a lighting control device for controlling light output from a luminaire is provided, the lighting control device comprising a control means for controlling light output from the luminaire, the control means preprogrammed with a lighting control logic; a communication means for wireless communication with other lighting control devices that serve to control other luminaires, the communication means arranged to receive status indications from the other lighting control devices; and an adaptation means for adjusting the lighting control logic in accordance with received status indications via analysis of a history of status indications received from one or more other lighting control devices, wherein the adaptation means is arranged to: store, into a memory, the history of status indications received from one or more other lighting control devices and light level indications received from a light sensor arranged to observe light level in a space illuminated by the luminaire, analyze the stored status indications and light level indications in an attempt to identify a repeatedly occurring pattern that involves an increase in observed light level and reception of a status indication that indicates switching on the light output from a particular other luminaire taking place within a predefined time window, and reprogram, in response to identifying said repeatedly occurring pattern, the lighting control logic to define switching on the light output from the luminaire as a response to detecting an occurrence of a reprogrammed triggering condition, wherein the reprogrammed triggering condition comprises receiving a status indication that indicates switching on the light output from the particular other luminaire.

According to another example embodiment, a method for controlling light output from a luminaire is provided, the method comprising controlling light output from the luminaire in accordance with a preprogrammed lighting control logic; receiving status indications from lighting control devices that serve to control other luminaires; and adjusting the lighting control logic in accordance with received status indications via analysis of a history of status indications received from one or more other lighting control devices, wherein the adjustment comprises: storing, into a memory, the history of status indications received from one or more other lighting control devices and light level indications received from a light sensor arranged to observe light level in a space illuminated by the luminaire, analyzing the stored status indications and light level indications in an attempt to identify a repeatedly occurring pattern that involves an increase in observed light level and reception of a status indication that indicates switching on the light output from a particular other luminaire taking place within a predefined time window, and reprogramming, in response to identifying said repeatedly occurring pattern, the lighting control logic to define switching on the light output from the luminaire as a response to detecting an occurrence of a reprogrammed triggering condition, wherein the reprogrammed triggering condition comprises receiving a status indication that indicates switching on the light output from a particular other luminaire.

According to another example embodiment, a computer program for controlling light output from a luminaire is provided, the computer program comprising computer readable program code configured to cause performing at least the method according to the example embodiment described in the foregoing when said program code is executed on a computing apparatus.

The computer program according to the above-described example embodiment may be embodied on a volatile or a non-volatile computer-readable record medium, for example as a computer program product comprising at least one computer readable non-transitory medium having the program code stored thereon, which, when executed by a computing apparatus, causes the computing apparatuses at least to perform the method according to the example embodiment described in the foregoing.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1A illustrates a block diagram of some components of a lighting unit according to an example;
Figure 1B illustrates a block diagram of some components of a lighting arrangement according to an example;
Figure 1C illustrates a block diagram of some components of a lighting arrangement according to an example;
Figure 2 illustrates lighting units of a lighting arrangement arranged for illumination of a space according to an example;
Figure 3A illustrates a block diagram of some components of a lighting unit according to an example;
Figure 3B illustrates a block diagram of some components of a lighting arrangement according to an example;
Figure 4 illustrates a method according to an example; and
Figure 5 illustrates a block diagram of some elements of an apparatus according to an example.

### DESCRIPTION OF SOME EMBODIMENTS

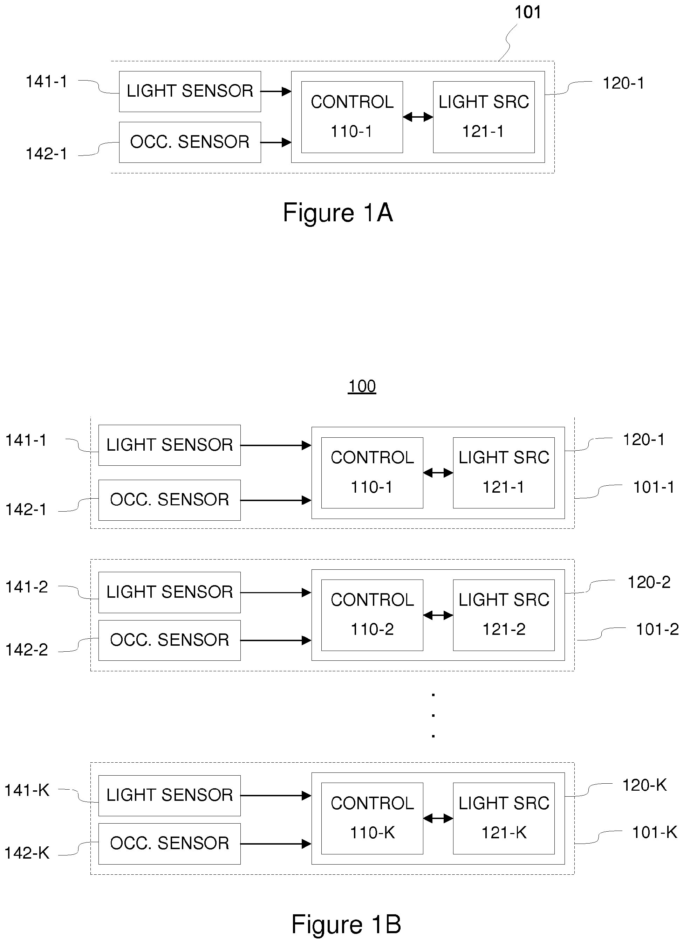

Figure 1A illustrates a block diagram of some logical components of a lighting unit 101 according to an example, the lighting unit 101 comprising a luminaire 120-1, a light sensor 141-1 and an occupancy sensor 142-1, where each of the light sensor 141-1 and the occupancy sensor 142-1 is coupled to the luminaire 120-1, e.g. via a respective wired connection. The luminaire 120-j comprises a lighting control device 110-1 and at least one light source 121-1. The lighting control device 110-1 comprises a lighting control means (e.g. a lighting control portion) for controlling the light output from the at least one light source 121-1, an adaptation means (e.g. an adaptation portion) for adjusting operation of the lighting control means and a communication means (e.g. a communication portion) for wireless communication with respective control devices of other luminaires 120, the communication means hence enabling the communicative coupling between the luminaire 120-1 and other luminaires 120 via a wireless communication network and/or via respective wireless links. The lighting control device 110-1 is arranged to control light output of the luminaire 120-1 based at least in part on information received from the light sensor 141-1 and/or from the occupancy sensor 142-1 and/or on information received from other luminaires 120 via the communication means.

Figure 1B illustrates a block diagram of some logical components of a lighting arrangement 100 according to an example, where the lighting arrangement comprises a plurality of lighting units 101-1, 101-2, ..., 101-K. Hence, the lighting arrangement comprises luminaires 120-1, 120-2, ..., 120-K, light sensors 141-1, 141-2, ..., 141-K and occupancy sensors 142-1, 142-2, ..., 142-K, where the light sensor 141-k and the occupancy sensor 142-k are coupled to the luminaire 120-k via respective wired links. The luminaires 120-1, 120-2, ... 120-K represent a plurality of (i.e. two or more) luminaires, where an individual luminaire may be referred to via a reference number 120-k. Along similar lines, the light sensors 141-1, 141-2, ..., 141-K represent a plurality of (i.e. two or more) light sensors 141, where the individual light sensor coupled to the luminaire 120-k may be referred to via a reference number 141-k and the occupancy sensors 142-1, 142-2, ..., 142-K represent a plurality of (i.e. two or more) occupancy sensors 142, where the individual occupancy sensor coupled to the luminaire 120-k may be referred to via a reference number 142-k. Each luminaire 120-k comprises a respective lighting control device 110-k and respective at least one light source 121-k. The structure and operation of each luminaire 120-k is similar to that described in the foregoing for the luminaire 120-1.

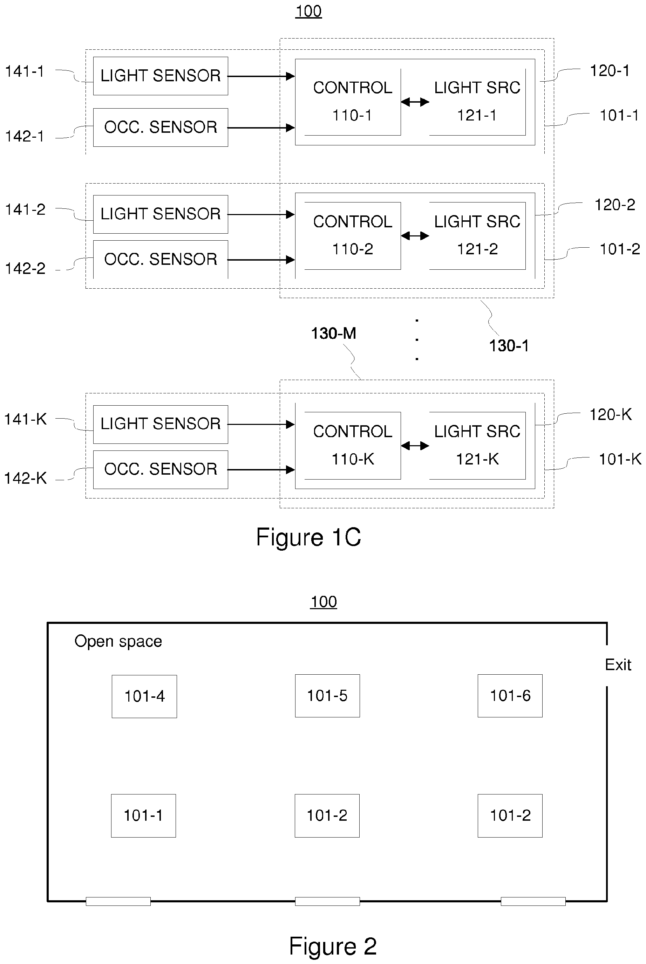

Figure 1C illustrates a variation of the lighting arrangement 100 according to an example, where luminaires 120-1 and 120-2 are assigned to a luminaire group 130-1 and the luminaire 120-K is assigned to a luminaire group 130-M. While the example of Figure 1C illustrates respective luminaire groups 130-1, 130-M of two and one luminaires 120, in general the luminaires 120 may be assigned to any desired number of luminaire groups 130-m that each comprise respective one or more luminaires 120.

As described in the foregoing, each luminaire 120-k is coupled to the light sensor 141-k and the occupancy sensor 142-k. Each of the light sensor 141-k and the occupancy sensor 142-k may be provided as part of the luminaire 120-k (e.g. arranged in the same housing with the luminaire 120-k) or as a respective sensor entity that is separate from the luminaire 120-k. In a further example, the light sensor 141-k and the occupancy sensor 142-k may be provided in a sensory assembly that is separate from the luminaire 120-k.

The light sensor 141-k may be arranged to observe ambient light level in (the portion of) the space (to be) illuminated by the luminaire 120-k and to provide a light sensor signal that is descriptive of or otherwise enables deriving the current ambient light level in (the portion of) the space illuminated by the luminaire 120-k. The light sensor signal from the light sensor 141-k received at the lighting control device 110-k may be referred to as a local light sensor signal.

The occupancy sensor 142-k may be arranged to observe occupancy (or non-occupancy) in (the portion of) the space and to provide an occupancy sensor signal that is descriptive of or otherwise enables deriving the current occupancy status (occupancy or non-occupancy) in (the portion of) the space (to be) illuminated by the luminaire 120-k. The occupancy sensor signal from the occupancy sensor 142-k received at the lighting control device 110-k may be referred to as a local occupancy sensor signal. In a non-limiting example, the occupancy sensor 142-k is provided as a motion sensor, such as a passive infrared (PIR) sensor. In this regard, for practical purposes a sensor signal from a motion sensor indicating motion (or lack thereof) may directly serve as or translate into an occupancy sensor signal that indicates one of occupancy or non-occupancy in (the portion of) the space monitored by the motion sensor.

In a non-limiting example, the at least one light source 121-k comprises one or more light emitting diodes (LEDs) and the lighting control device 110-k comprises or is provided as a LED driver device, whereas in another non-limiting example the at least one light source 121-k comprises one or more fluorescent lamps and lighting control device 110-k comprises or is provided as an electronic ballast.

The lighting arrangement 100 may be arranged for illuminating respective portions or areas of an indoor or outdoor space or as a lighting arrangement for illuminating respective one or more (indoor or outdoor) spaces that are adjacent or otherwise close to each other. As a few non-limiting examples, the illuminated space may comprise e.g. an office room, an open office space, a meeting room, a classroom, an auditorium, a retail store, a warehouse, a factory or other industrial establishment, a parking garage, a parking lot, a sports venue, etc. Figure 2 illustrates the lighting units 101 of the lighting arrangement 100 arranged for illumination of a space according to an example, which space in this non-limiting example comprises an open office space. In this example, the lighting arrangement 100 comprises lighting units 101-1, 101-2, 101-3, 101-4, 101-5 and 101-6, each arranged for illuminating a respective sub-portion of the space. The lighting units 101-1 to 101-6 represent a plurality of (i.e. two or more) lighting units, where an individual lighting unit may be referred to via a reference number 101-k.

The luminaires 120-k of the lighting units 101-k of the lighting arrangement 100 may be arranged into one or more luminaire groups 130-m, along the lines illustrated via the example of Figure 1C. The luminaire 120-k may be defined as one belonging to a certain luminaire group 130-m via manual configuration or re-configuration upon installation or maintenance of the luminaire 120-k, of the luminaire arrangement 100 and/or the space (to be) illuminated by the luminaire arrangement 100.

The lighting control device 110-k, e.g. the lighting control means therein, may be preprogrammed (or otherwise provided) with a lighting control logic that defines the manner of controlling the light output from the luminaire 120-k. Hence, the light output control provided by the lighting control device 110-k may substantially follow from the lighting control portion therein implementing the lighting control logic defined for the lighting control device 110-k. However, for brevity and clarity of the description, in the following lighting control actions arising from implementation of the lighting control logic are predominantly described as operations carried out by the lighting control device 110-k.

The preprogrammed lighting control logic may be defined by configuring the lighting control device 110-k to operate accordingly upon manufacturing the lighting control device 110-k and/or the luminaire 120-k. The lighting control logic may be provided e.g. as program code stored in a memory in the lighting control device 110-k that will be executed by a processor in the lighting control device 110-k in the course of its operation. In general, the preprogrammed lighting control logic may define one or more pairs of a predefined triggering condition and a lighting control action to be carried out as a response to an occurrence of the predefined triggering condition, where the triggering condition may be based, for example, on the local light sensor signal, on a local occupancy sensor signal, on an external sensor signal and/or on a status indication received from lighting control device 110-n of another luminaire 120-n that belongs to the same luminaire group 130-m with the luminaire 120-k.

Along the lines described in the foregoing, the lighting control device 110-k may be arranged to control the light output of the luminaire 120-k based at least in part on the local light sensor signal and/or the local occupancy sensor signal. In this regard, the preprogrammed lighting control logic in the lighting control device 110-k may define one or more pairs of a predefined local triggering condition and a lighting control action to be carried out as a response to an occurrence of the predefined local triggering condition that may directly or indirectly pertain to the local occupancy sensor signal, which occupancy sensor signal may be considered to indicate a current occupancy status (i.e. occupancy or non-occupancy) in the (portion of) space illuminated by the luminaire 120-k. Herein, the triggering condition is designated as 'local' due its occurrence locally, relying on the local occupancy sensor signal received from the occupancy sensor 142-k. Non-limiting examples of such pairs of a local triggering condition and a lighting control action to be taken as a response to an occurrence of the local triggering condition include the following.
- The lighting control device 110-k may be arranged to, as a response to the local occupancy sensor signal indicating occupancy after a period of non-occupancy, switch on the light output from the luminaire 120-k at a respective target light intensity I_{tgt,k}.
- The lighting control device 110-k may be arranged to, as a response to the local occupancy sensor signal indicating continuous occupancy, keep the light output from the luminaire 120-k at the current light intensity, e.g. at the respective target light intensity I_{tgt,k}.
- The lighting control device 110-k may be arranged to, as a response to the local occupancy sensor signal indicating non-occupancy after a period of occupancy, start a first switch-off timer to measure a respective switch-off period T_{off,k}, to start a respective dim-down timer to measure a respective dim-down period Tdim,k (where T_{off,k} > Tdim,k), to adjust the light output from the luminaire 120-k to a respective intermediate light intensity I_{int,k} (where lint,k < I_{tgt,k}) in response to the respective dim-down timer elapsing before the local occupancy sensor signal again indicating occupancy and to adjust the light output from the luminaire 120-k to a respective stand-by light intensity I_{off,k} in response to the respective switch-off timer elapsing before the local occupancy sensor signal indicating occupancy.

The above-described aspects of the lighting control that involve carrying out a respective predefined lighting control action as a response to a respective predefined local triggering condition that directly or indirectly pertains to the local occupancy sensor signal may constitute (part of the) preprogrammed lighting control logic of the lighting control device 110-k. Further in this regard, also the switch-off period T_{off,k}, the dim-down period T_{dim,k}, the target light intensity I_{tgt,k}, the intermediate light intensity I_{dim,k} and the stand-by light intensity I_{off,k} may be initially set to respective preprogrammed default values, which are stored in the memory in the lighting control device 110-k.

In this regard, the switch-off period T_{off,k} and the dim-down period T_{dim,k} may be initially set to respective default values, e.g. such that the switch-off period T_{off,k} is set to a first value and the dim-down period Tdim,k is set to a second value that is smaller than the first value. The first value may be for example a suitable value chosen from the range from 5 to 10 minutes whereas the second value may be in the order of a few minutes. Along similar lines, the target light intensity I_{tgt,k} may be defined as a respective first predefined percentage of the maximum light intensity of the at least one light source 121-k, for example a respective suitable value chosen from the range from 70 % to 100 %, e.g. 80 %, may be applied. Along similar lines, the intermediate light intensity I_{int,k} may be defined as a second respective predefined percentage of the maximum light intensity of the at least one light source 121-k, for example a respective suitable value chosen from the range from 20 % to 50 %, e.g. 30 %, may be applied. Moreover, the stand-by light intensity I_{off,k} may be defined as a third respective predefined percentage of the maximum light intensity of the at least one light source 121-k, for example a respective suitable value chosen from the range from 0 % to 20 %, e.g. 0 % or 10 %, may be applied.

As described in the foregoing, the lighting control device 110-k comprises the communication means that enable the lighting control device 110-k to wirelessly communicate with other lighting control devices of the lighting arrangement 100. In this regard, the wireless communication is possible both with lighting control devices of luminaires of the luminaire group 130-m in which the luminaire 120-k belongs to and with lighting control devices of luminaries in other luminaire groups of the lighting arrangement 100. The communication means in the lighting control device 110-k may comprise a wireless transceiver that is capable of communicating with wireless transceivers in lighting control devices of other luminaires 120 using a wireless communication technique or protocol. The wireless communication may be provided by using a suitable short-range wireless communication technique known in the art that enables communication over ranges from a few meters up to a few hundred meters. Examples of suitable wireless communication techniques include Bluetooth, Bluetooth Low-Energy, ZigBee, WLAN/Wi-Fi according to a IEEE 802.11 standard, etc. Further examples include infra-red communications and other non-radio-based short-range communication techniques.

The choice of the short-range wireless communication technique and network topology for a specific embodiment of the lighting arrangement 100 may depend e.g. on the required communication range and/or requirements with respect to energy-efficiency of the communication means. As a concrete non-limiting example, the wireless communication may rely on a wireless mesh network model, for example on a mesh network according to the Bluetooth mesh networking protocol known in the art.

In the course of its operation, the lighting control device 110-k is arranged to transmit status indication messages via the communication means therein. Each status indication message comprises, in addition to information defined by the applied communication protocol, one or more status indications pertaining to the current (or recent) operating status of the lighting control device 110-k transmitting the status indication message. Conversely, the lighting control device 110-k receives status indication messages (and hence status indications) from other lighting control devices of the lighting arrangement 100. A status indication transmitted from the lighting control device 110-k or received at the lighting control device 110-k may comprise an action indication that identifies a lighting control action taken by the lighting control device 110-k that has transmitted the status indication. Non-limiting examples of such status indications are described in the following:
- An action indication may comprise an indication of switching on the light output from the luminaire 120-k (e.g. at the respective target light intensity I_{tgt,k}).
- An action indication may comprise an indication of keeping the light output from the luminaire 120-k at the current light intensity level (e.g. at the respective target light intensity I_{tgt,k}).
- An action indication may comprise an indication of dimming-down the light output from the luminaire 120-k (e.g. to the respective intermediate light intensity I_{dim,k}).
- An action indication may comprise an indication of adjusting the light output from the luminaire 120-k to the respective stand-by light intensity I_{off,k} (e.g. switching off the light output from the luminaire 120-k).

The lighting control device 110-k may be arranged to transmit a status indication message comprising a respective action indication, for example, each time it takes a lighting control action that changes the light intensity of the light output from the luminaire 120-k (e.g. switches the light on, switches the light off, dims down the light output) as a response to a respective predefined local triggering condition. Moreover, a status message comprising an action indication that indicates keeping the light output of the luminaire 120-k at the current light intensity level may be transmitted e.g. at predefined time intervals during a continuous period of the local occupancy sensor signal indicating occupancy.

In an example, a status indication or a status indication message conveying the status indication may further comprise a device identifier assigned to the lighting control device 110-k (or to the luminaire 120-k) that has transmitted the status indication, in other words an identification of the luminaire 120-k to which the status indication pertains. The device identifier may comprise, for example, an address, a serial number, a name, etc. assigned to the lighting control device 110-k (or that assigned to the luminaire 120-k). The status indication or the status indication message conveying the status indication may further comprise a group identifier assigned to the luminaire group to which the luminaire 120-k that transmits the status indication belongs.

Along the lines described in the foregoing, the lighting control device 110-k may be arranged to control the light output of the luminaire 120-k based at least in part on the local light sensor signal and/or the local occupancy sensor signal via one or more pairs of a local triggering condition and a lighting control action to be carried out as a response to an occurrence of the predefined triggering condition defined as part of the preprogrammed lighting control logic. In this regard, the preprogrammed lighting control logic in the lighting control device 110-k may further define one or more pairs of a predefined remote triggering condition and a lighting control action to be carried out as a response to an occurrence of the predefined remote triggering condition that may directly or indirectly pertain to a status indication received from the lighting control device 110-n of another luminaire 120-n that belongs to the same luminaire group 130-m with the luminaire 120-k. Herein, the triggering condition is designated as 'remote' due its occurrence as a consequence of a triggering condition and/or a lighting control action having taken place in the luminaire 120-n. Non-limiting examples of such pairs of a remote triggering condition and a lighting control action to be taken as a response to an occurrence of the remote triggering condition include the following.
- The lighting control device 110-k may be arranged to, as a response to receiving a status indication indicating that the luminaire 120-n that belongs to the same luminaire group 130-m with the luminaire 120-k has switched on its light output, switch on the light output from the luminaire 120-k (e.g. at the respective target light intensity I_{tgt,k}) or adjust the light output from the luminaire 120-k to the respective target light intensity I_{tgt,k.,} depending on the current light output (or lack thereof) from the luminaire 120-k.
- The lighting control device 110-k may be arranged to, as a response to receiving a status indication indicating that the luminaire 120-n that belongs to the same luminaire group 130-m with the luminaire 120-k has kept on its light output at its current light intensity, switch on the light output from the luminaire 120-k (e.g. at the respective target light intensity I_{tgt,k}) or adjust the light output from the luminaire 120-k to the respective target light intensity I_{tgt,k}, depending on the current light output (or lack thereof) from the luminaire 120-k.
- The lighting control device 110-k may be arranged to, as a response to receiving a status indication indicating that the luminaire 120-n that belongs to the same luminaire group 130-m with the luminaire 120-k has adjusted its light output to the respective stand-by light intensity I_{off,n} (e.g. switched off its light output), adjust the light output from the luminaire 120-k to the respective stand-by light intensity I_{off,k}.

In other words, the preprogrammed lighting control logic may define that the lighting control device 110-k follows the lighting control actions taken by (any) other luminaire 120-n that is assigned to the same luminaire group 130-m with the luminaire 120-k.

The lighting control device 110-k may be further arranged to control the light output from the luminaire 120-k in accordance with one or more control signals received from a user-operable control panel arranged in the space (to be) illuminated by the luminaire 120-k. The control panel may be coupled to the lighting control device 110-k by a wired or wireless communication link or communication network. In this regard, the control panel may enable user actions for switching the lights on and setting the lights off and possibly also for adjusting the lights to a desired light intensity. Consequently, the lighting control device 110-k may be arranged to control the light output under control of the one or more control signals from the control panel accordingly, e.g. to switch on the light output from the luminaire 120-k (at the respective target light intensity I_{tgt,k}), to adjust the light output from the luminaire 120-k to the respective stand-by light intensity I_{off,k} (e.g. switch off the light output) and/or to adjust the light output from the luminaire 120-k to a user-selected light intensity.

The lighting control device 110-k may be further arranged to switch on the light output from the luminaire 120-k in response to a command or message received from a remote control device, which may comprise, for example, a dedicated remote control device or a mobile communication device (such as a mobile phone or a tablet computer) provided with a software application that provides the remote control functionality. The remote control device may enable similar control of the light output from the luminaire 120-k as described above for the control panel, whereas the lighting control device 120-k may receive the one or more control signals from the remote control device via a wireless communication link or communication network, e.g. via the communication means of the lighting control device 110-k.

The lighting control device 110-k may be further arranged to switch on the light output from the luminaire 120-k in response to the luminaire 120-k receiving operating power (e.g. from the mains electricity) after a period of not receiving the operating power.

The lighting control device 110-k may be arranged to store, in the memory therein, a history of locally obtained sensor data including light level indications derived based on the local light sensor signal and/or occupancy indications derived bases on the local occupancy sensor signal. In this regard, the light level indications may be stored at respective predefined time intervals and/or each time the observed light level changes by more than a predefined threshold, whereas the occupancy indications may be stored at respective predefined time intervals and/or each time a change in occupancy status (from non-occupancy to occupancy or vice versa) is observed. The lighting control device 110-k may be arranged to further store, in the memory, a history of occurrences of local triggering conditions and the resulting lighting control actions it has taken in response to the local triggering conditions arising from the occupancy sensor signals. The lighting control device 110-k may be further arranged to store, in the memory, a history of status indications received from respective lighting control devices of other luminaires 120 of the lighting arrangement 100. Moreover, the lighting control device 110-k may be arranged to store in the memory a history of status indications transmitted therefrom. The history information stored in the memory may cover a predefined time period and each piece of history data may be stored together with respective timing information that indicates the capturing time and/or the transmission time of a respective piece of stored data (whichever applies). The timing information may comprise a respective timestamp that indicates time with respect to a predefined reference time.

The adaptation means in the lighting control device 110-k may be arranged to adjust or complement the preprogrammed lighting control logic defined for the lighting control device 110-k based at least in part on the status indications received from the lighting control devices of other luminaires 120 of the lighting arrangement 100. In this regard, the adaptation means may be arranged to carry out a self-adaptation procedure to complement or at least partially reprogram preprogrammed lighting control logic defined for the lighting control device 110-k. As an example, the self-adaptation procedure may be initiated in response to a user command received e.g. via a user interface of the lighting control device 110-k or in a specific control message received via the communication means. In another example, the self-adaptation procedure may be initiated according to a predefined schedule, e.g. at predefined time intervals. In a further example, the self-adaptation procedure is carried out continuously or substantially continuously.

According to a non-limiting example, some aspects of the self-adaptation procedure with respect to a given local triggering condition may be carried out, for example, along the lines described in paragraphs [0032] to [0058] of the European patent publication no. 3171674 A1. Even though the examples pertaining to the analysis procedure are described therein with references to determination of a relationship strength that is indicative of regularity at which 'triggering local input signals' have been observed after first having received an 'indication message from a 'particular other device', the procedure equally applies to determination of a relationship strength that is indicative of regularity at which a given local triggering condition has been observed after first having received a given status indication from the lighting control device of a particular other luminaire of the lighting arrangement 100, *mutatis mutandis.* According to an example, the analysis of received status indications may be carried out to determine a respective relationship strength for a number of other luminaires 120 of the lighting arrangement and for a number of local triggering conditions, followed by complementing or reprogramming the lighting control logic of the lighting control device 110-k in accordance with the determined relationship strengths.

According to another non-limiting example, some aspects of the self-adaptation procedure may comprise an analysis of status indications received from the lighting control devices of other luminaires 120 of the lighting arrangement 100 in an attempt to identify a repeatedly occurring pattern that includes a certain sequence of one or more received status indications followed by a given local triggering condition and, in case of identifying such repeatedly occurring pattern, complementing or reprogramming the lighting control logic in the lighting control device 110-k to carry out the lighting control action associated with the given local triggering condition in response to reception of said given sequence of one or more status indications included in the identified pattern. The self-adaptation procedure may be carried out separately for a plurality of the local triggering conditions (and the associated lighting control actions) defined for the lighting control device 110-k. In this regard, some aspects of the analysis part of the self-adaptation procedure with respect to a single given local triggering condition may be carried out, for example, along the lines described in paragraph [0033] of the European patent publication no. 2919562 A1.

According to an example, the analysis of received status indications may identify one or more different patterns that involve the given local triggering condition, each identified pattern occurring at least a predefined number of times. Hence, the analysis identifies one or more candidate sequences of one or more status indications that are followed by a respective occurrence of the given local triggering condition, and the analysis may be followed by complementing or reprogramming the lighting control logic of the lighting control device 110-k in accordance with the one or more candidate sequences. A candidate sequence is considered as a repeatedly occurring one in case it meets one or more predefined criteria pertaining to its number and/or frequency of occurrences in combination with the given local triggering condition, where the predefined criteria may depend on the given local triggering condition under consideration and/or on the lighting characteristics of the at least one light source 121-k of the luminaire 120-k. Moreover, the aspect of complementing or reprogramming the lighting control logic of the lighting control device 110-k may be carried out in dependence of the lighting control action associated with the given local triggering condition under consideration and/or in dependence of the lighting characteristics of the at least one light source 121-k of the luminaire 120-k.

In general, the self-adaptation procedure may comprise an analysis of the history of locally obtained sensor data and the history of status indications received from respective lighting control devices of other luminaires 120 of the lighting arrangement 100, for example in accordance with the respective techniques described in the European patent publications no. 2919562 A1 and no. 3171674 A1 outlined above and/or in accordance with other machine-learning techniques that rely e.g. on fuzzy logic, neural networks and/or other artificial intelligence techniques known in the art.

According to a further example, some aspects of the self-adaptation procedure may comprise an analysis of status indications received from the lighting control devices of other luminaires 120 of the lighting arrangement 100 in view with the history of locally obtained light level indications derived based on the local light sensor signal available in the memory of the lighting control device 110-k in an attempt to identify a repeatedly occurring pattern that involves an increase in observed light level and reception of a status indication providing an indication of a particular other luminaire 120-p of the lighting arrangement 100 having switched on its light output taking place within a predefined time window T_{ad}. In case such repeatedly occurring pattern is identified, the lighting control logic in the lighting control device 110-k may be complemented or reprogrammed to define switching on the light output from the luminaire 120-k as a response to detecting an increase in observed light level and receiving a status indication that indicates switching on the light output from the particular other luminaire 120-p within the predefined time window T_{ad}. In other words, detection of an increase in observed light level and reception of a status indication that indicates switching on the light output from the particular other luminaire 120-p taking place within the predefined time window T_{ad} may serve as a reprogrammed triggering condition for switching on the light output from the particular other luminaire 120-p.

The above-described analysis for identification of a repeatedly occurring pattern that involves an increase in observed light level and reception of a status indication providing an indication of switching on the light output from a particular other luminaire 120-p of the lighting arrangement 100 taking place within the predefined time window T_{ad} and the complementing or reprogramming of the lighting control logic that follows successful identification of a repeatedly occurring pattern of said kind may be carried out separately for a number other luminaires 120 of the lighting arrangement. In a non-limiting example, the analysis is carried out based on light level indications and status indications obtained within one or more time periods during which the light output from the luminaire 120-k is switched off or adjusted to the respective stand-by light intensity loff,k.

In this regard, the duration of the time window T_{ad} should be sufficiently short to ensure that the detected increase in the observed light level is a direct or indirect consequence of switching on the light output from the particular other luminaire 120-p. As a non-limiting example, the duration of the time window T_{ad} may be set to a selected value in a range from a few tenths of a second to a few seconds or even up to one minute . Consequently, the self-adaptation procedure results in the lighting control device 110-k learning to promptly switch on the light output from the luminaire 120-k as a response to the particular other luminaire 120-p that is arranged for illumination of the same (portion of) the space with the luminaire 120-k in vicinity of the luminaire 120-k switching on its light output, thereby enabling self-adaptation that results in a set of luminaires that are physically close to each other learning to switch on the light in response to any luminaire of the set having switched on the light. As a concrete example in this regard, if the occupancy sensor 142-k of the lighting unit 101-k relatively seldom detects occupancy even though other lighting units 101 nearby detect occupancy (e.g. due to installation, misconfiguration or malfunction of the occupancy sensor 142-k), the self-adaptation procedure results also in the lighting control device 110-k learning to switch on the light output from the luminaire 120-k along with other luminaires 120 in its proximity.

The reprogrammed triggering condition that results in switching on the light output from the luminaire 120-k as a consequence of detecting both the increase in the observed light level and reception of the status message indicating switching on the light output from the luminaire 120-p (within the predefined time window T_{ad}.) ensures that resulting reprogrammed triggering condition is applicable as long as the visibility of light output from the particular other luminaire 120-p and/or the distance between the luminaries 120-k and 120-p do not substantially change: e.g. a subsequent refurbishment or other rearrangement of the space (to be) illuminated by the luminaires 120 may change the spatial relationship between the luminaires 120-k and 120-p e.g. such that they are brought further away from each other and/or by creating a light-blocking obstacle (such as a wall built in a formerly open space) that might no longer justify application of the reprogrammed triggering condition for switching on the light output from the luminaire 120-k.

In another example, the reprogramming that may follow identification of a repeatedly occurring pattern of the kind described in the foregoing (and in the following) may result in complementing or reprogramming the lighting control logic to define switching on the light output from the luminaire 120-k as a response to receiving a status indication that indicates switching on the light output from the particular other luminaire 120-p, i.e. without the requirement to also detect an increase in observed light level to take place within the predefined time window T_{ad} together with the reception of such a status indication pertaining to the luminaire 120-p. In other words, in this example the reprogrammed triggering condition (for switching on the light output from the luminaire 120-k) comprises reception of a status indication that indicates switching on the light output from the particular other luminaire 120-p. While this approach simplifies detection of an occurrence of the reprogrammed triggering condition in the lighting control device 110-k, omitting the requirement of a change in the observed light level from the reprogrammed triggering condition could result in a situation where e.g. a subsequent refurbishment or other rearrangement of the space (to be) illuminated by the luminaires 120 could change the spatial relationship between the luminaires 120-k and 120-p (e.g. via introduction of a wall therebetween) such that the reprogrammed triggering condition would no longer be justified (e.g. due to the luminaires 120-k and 120-p no longer serving to illuminate the same (portion of the) space).

To account for a situation where the reprogrammed triggering condition defined as a result of having identified a repeatedly occurring pattern that involves an increase in observed light level and reception of a status indication providing an indication of switching on the light output from a particular other luminaire 120-p taking place within the predefined time window T_{ad} has become invalid due to a subsequent change in spatial relationship between the luminaires 120-k and 120-p, the adaptation means in the lighting control device 110-k may be arranged to subsequently re-evaluate validity of the reprogrammed triggering condition. This aspect is described via an example later in this text.

The analysis for identification of such repeatedly occurring pattern pertaining to a particular other luminaire 120-p and subsequent detection of an occurrence of the reprogrammed triggering condition that may be defined following the analysis may apply, for example, one or more of the following criteria for identifying an increase in observed light level and/or for identifying reception of a status indication that provides an indication of switching the light output from the particular other luminaire 120-p that may be taken into account in identification of a repeatedly occurring pattern and/or in detection of an occurrence of the reprogrammed triggering condition:
- The observed increase in the observed light level must exceed a specified change threshold. In an example, the change threshold comprises a predefined (e.g. fixed) value, whereas in another example the change threshold comprises an adaptive value. The change threshold may be defined as an absolute value (e.g. a predefined increase in Ix), whereas it may be advantageous to define the change threshold as a relative value (e.g. a predefined percentage) for more generic applicability. As an example, adaptation of the change threshold may comprise adapting the change threshold in dependence of the estimated distance between the luminaire 120-k and the particular other luminaire 120-p e.g. such that the change threshold is decreased with increasing (estimated) distance between the luminaires 120-k and 120-p. In another example, additionally or alternatively, adaptation of the change threshold may comprise the lighting control device 110-k using, before carrying out the self-adaptation procedure, the light sensor 141-k to measure the minimum and maximum observed light levels (e.g. over a time period having a duration from several hours to several days) and defining the change threshold as a predefined percentage of the difference between the maximum and minimum observed light levels, thereby adapting the change threshold in view of the expected variation in observed light levels in the operating environment of the luminaire 120-k over different lighting conditions. In a variation of this example, the maximum and minimum of the observed light levels may be measured over a (sub-)period of time during which the light output from the luminaires 120 of the lighting arrangement 100 remains unchanged (e.g. such that the light output from the luminaire 120-k is off or at the respective stand-by light intensity I_{off,k} and the light output from one or more other luminaires 120 is on), thereby adapting the change threshold in view of the variation in the light sensor signal during (substantially) stable lighting conditions. In a further example, the lighting control device 110-k may use the light sensor 141-k to measure, before carrying out the self-adaptation procedure, a first observed light level that indicates light level when the light output from the luminaire 120-k is switched on and a second light level when the light output from the luminaire 120-k is switched off (or adjusted to the respective stand-by light intensity I_{off,k}) and define the change threshold as a predefined percentage of the difference between the first and second observed light levels, thereby adapting the change threshold in view of the increase in light level provided by the luminaire 120-k. Consequently, the change threshold may depend on one or more factors that relate to characteristics of the light sensor 141-k, characteristics of the luminaire 120-k and/or characteristics of the other luminaires 120 of the lighting arrangement 100 and, consequently, may result in a change threshold value that corresponds to a change in a range from a few Ix to more than 100 Ix, whereas a typical threshold value may correspond to a change in a range of a few tens of Ix.
- The increase in the observed light level must occur within a predefined time period Tᵤₚ (where Tᵤₚ < T_{ad}) The time period Tᵤₚ typically comprises a predefined time period selected from a range from a few tenths of a second to a few seconds, whereas in some examples the time period may be up to a few tens of seconds or even up to one minute. Consequently, only those occasions of increasing light level that take place fast enough and result in a non-negligible increase in the observed light level may be identified in the analysis.
- The observed light level (after the observed increase) must exceed a predefined light level threshold. As an example, the predefined light level threshold may comprise a suitable value selected from a range from a few Ix to 150 Ix, e.g. a value selected from a range from 30 to 50 Ix, e.g. 40 Ix. Consequently, only those occasions of increasing light level that result in a non-negligible observed light level may be identified in the analysis.
- A received status indication under consideration must have been received in a status indication message having a received signal strength indication (RSSI) that exceeds a signal strength threshold. In an example, the signal strength threshold comprises a predefined threshold. In another example, the signal strength threshold comprises an adaptive threshold defined based on RSSIs of previously received status indications messages, e.g. as a predefined percentage of a maximum RSSI among previously received status indication messages, for example 10 % or another value selected from a range from 5 to 20 %. Consequently, only those other luminaires that are sufficiently close to the luminaire 120-k may be considered in the analysis.
- In case the wireless communication between the luminaires of the lighting arrangement 100 is provided by a wireless mesh network, the number of hops between the lighting control device 110-k and the lighting control device 110-p of the particular other luminaire 120-p must be smaller than a predefined hop threshold. In other words, the number of nodes via which the status indication message that conveys the status indication under consideration have been received must be smaller than the predefined hop threshold. The number of hops between the lighting control device 110-k and the lighting control device 110-p of the particular other luminaire 120-p may be derived, for example, based on information included in one or more packets that carry the status indication message conveying the status indication under consideration. Consequently, only those other luminaires that are sufficiently close to the luminaire 120-k may be considered in the analysis.
- In case the luminaire 120-k belongs to the luminaire group 130-m, the particular other luminaire 120-p must be one that does not belong to the luminaire group 130-m, in other words the particular other luminaire 120-p must belong to another luminaire group or it does not belong to any luminaire group. Consequently, only those other luminaires that are not in the same luminaire group 130-m with the luminaire 120-k may be considered in the analysis while the luminaires in the same luminaire group 130-m with the luminaire 120-k may be excluded from the analysis (since the lighting control device 110-k is anyway configured to switch on the light output from the luminaire 120-k in response to receiving a status indication that indicates another luminaire of the same luminaire group 130-m having switching on the light output).

The analysis for identification of a repeatedly occurring pattern that involves an increase in observed light level and reception of a status indication providing an indication of a particular other luminaire 120-n of the lighting arrangement 100 switching on its light output taking place within a predefined time window T_{ad} may consider such a pattern to be a repeatedly occurring one for example in dependence of one or more of the following criteria:
- The pattern that involves an increase in observed light level and reception of a status indication under consideration taking place within the time window T_{ad} must have occurred at least a predefined number of times.
- At least a predetermined percentage of occurrences of a status indication under consideration must be accompanied by an increase in observed light level within the predefined time window T_{ad}.

Successful self-adaptation procedure that results in reprogramming the lighting control logic in the lighting control device 110-k to switch on the light output from the luminaire 120-k as a response to detecting the preprogrammed triggering condition that includes an increase in observed light level and reception of a status indication that indicates switching on the light output from the particular other luminaire 120-p taking place within the predefined time window T_{ad} may be further accompanied by reprogramming the lighting control logic in the lighting control device 110-k to adjust the light output from the luminaire 120-k to the respective stand-by light intensity I_{off,k} (e.g. switch off the light output from the luminaire 120-k) as a response to receiving a status indication that indicates adjusting the light output from the particular other luminaire 120-p to the respective stand-by light intensity I_{off,p} (e.g. switching off the light output from the luminaire 120-p). In particular, this aspect of the reprogramming may involve complementing the lighting control logic in the lighting control device 110-k to define adjusting the light output from the luminaire 120-k to the respective stand-by light intensity I_{off,k} (e.g. switching off the light output from the luminaire 120-k) in response to receiving an indication of the particular other luminaire 120-p adjusting its light output to the respective stand-by light intensity I_{off,p} (e.g. switching off its light output) in case the lighting control device 110-k has switched on the light output from the luminaire 120-k in response to an occurrence of the reprogrammed triggering condition pertaining to the luminaire 120-p.

The adaptation means in the lighting control device 110-k may be further arranged to verify validity of the reprogrammed triggering condition subsequent to its definition via the self-adaptation procedure described in the foregoing. As an example of such verification, the adaptation means may repeat the self-adaptation procedure pertaining to the particular other luminaire 120-p and cancelling the reprogrammed triggering condition pertaining to the particular other luminaire 120-p in response to a failure to identify the repeatedly occurring pattern that involves an increase in observed light level and reception of a status indication providing an indication of the particular other luminaire 120-p of the lighting arrangement 100 having switched on its light output taking place within a predefined time window T_{ad}. Such 'deprogramming' may be advantageous to avoid situations where e.g. subsequent refurbishment or other rearrangement of the space (to be) illuminated by the luminaires 120 has changed the spatial relationship between the luminaires 120-k and 120-p in a manner that invalidates the reprogramming of the lighting control logic carried out earlier. As non-limiting examples, the verification of validity of the reprogrammed triggering condition may be carried out according to a predefined schedule (e.g. at predefined time intervals) or the verification may be carried out continuously or substantially continuously

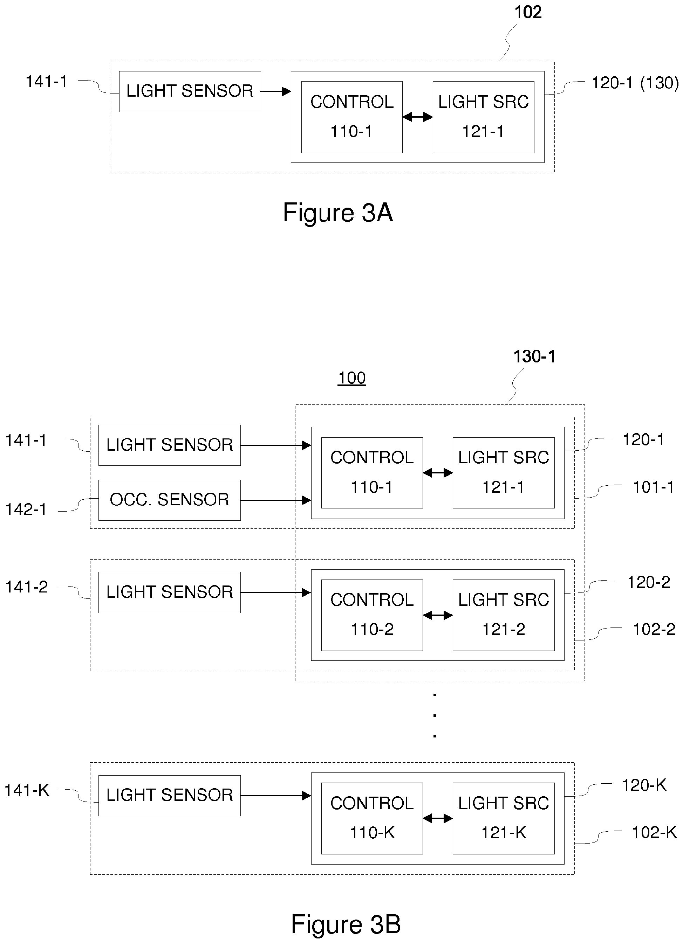

Figure 3A illustrates a block diagram of some logical components of a lighting unit 102 that is a variation of the lighting unit 101 described with references to Figure 1A. Therein, the difference to the lighting unit 101 is that the lighting unit 102 does not include the occupancy sensor 142-1. Figure 3B illustrates an exemplifying variation of the lighting arrangement 100 illustrated in Figure 1C, showing lighting units 101-1, 102-2 and 102-K. The luminaires 120-1 and 120-2 are assigned to the luminaire group 130 and the luminaire 120-K does not belong to any of the luminaire group (although conceptually it may be considered to constitute the luminaire group 130-M). In the luminaire group 130-1, the luminaire 120-2 (provided as part of the luminaire unit 102-2) is provided without the occupancy sensor and hence the lighting control device 110-2 therein is not able to control the light output of the luminaire 120-k based on the local occupancy sensor signal. In this regard, however, the lighting control device 110-2 is able to control the light output from the luminaire 120-2 based on the status indications received from lighting control device 110-1 of the luminaire 121-1, as described in the foregoing.

Moreover, the luminaire 120-K (provided as part of the luminaire unit 102-K) does not belong to any of the luminaire groups and hence the lighting control device 110-K therein is not able to control the light output from the luminaire 120-K based on the status indications received from other luminaire(s) of the same luminaire group. Moreover, in absence of the occupancy sensor in the luminaire unit 102-K, the lighting control device 110-K is not able to control the light output from the luminaire 120-K based on the local occupancy sensor signal either. However, over time the lighting control device 110-K may apply the self-adaptation procedure described in the foregoing to identify a repeatedly occurring pattern that involves an increase in observed light level and reception of a status indication providing an indication of switching on the light output from a particular other luminaire 120-p of the lighting arrangement 100 taking place within the predefined time window T_{ad} and complementing or reprogramming, in response to identifying such repeatedly occurring pattern, the lighting control logic in the lighting control device 110-K to define switching on the light output from the luminaire 120-K as a response to detecting an increase in observed light level and receiving a status indication that indicates switching on the light output from the particular other luminaire 120-p within the predefined time window T_{ad}. Hence, the lighting control device 110-K may learn to control the light output from the luminaire 120-K such that the lighting control actions (e.g. with respect to switching the light on or off) follow those applied by the particular other luminaire 120-p of the lighting arrangement 100.

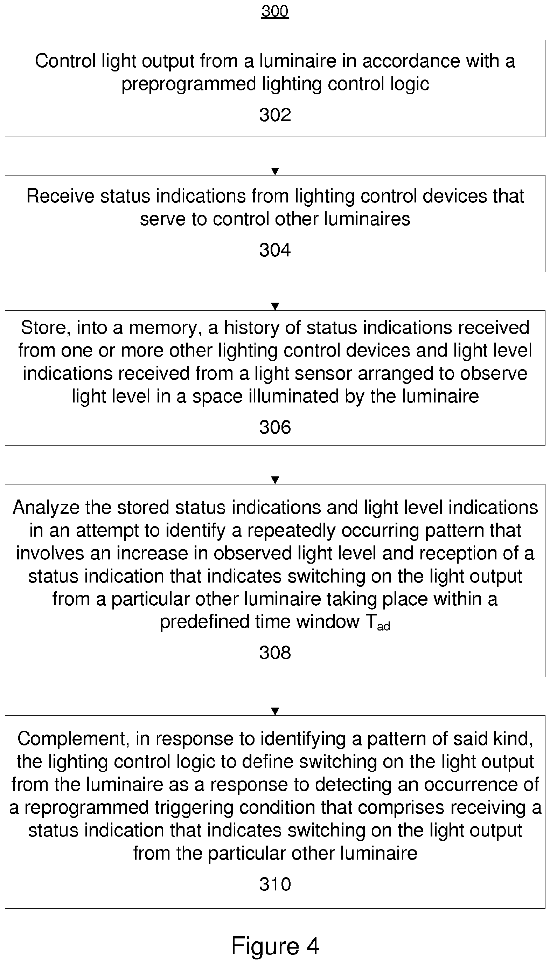

The operations described in the foregoing with references to the lighting control device 110-k may be also defined as a steps of method. As an example in this regard, Figure 4 depicts a flowchart that illustrates a method 300 for controlling light output from the luminaire 120-k. The operations described with references to blocks 302 to 310 pertaining to the method 300 may be varied or complemented in a number of ways, for example as described in the foregoing or in the following in context of the lighting control device 110-k and/or the luminaire 120-k.

The method 300 commences from controlling the light output from the luminaire 120-k in accordance with the preprogrammed lighting control logic, as indicated in block 302, and receiving the status indications from respective lighting control devices of other luminaires 120 of the lighting arrangement 100, as indicated in block 304. The method 300 further comprises adjusting and/or complementing the preprogrammed lighting control logic in accordance with received status indications.

The adjustment in context of the method 300 comprises storing, into the memory (of the lighting control device 110-k), a history of status indications received from one or more other lighting control devices and light level indications received from the light sensor 141-k that is arranged to observe light level in a space illuminated by the luminaire 120-k, as indicated in block 306. The adjustment further comprises analyzing the stored status indications and light level indications in an attempt to identify a repeatedly occurring pattern that involves an increase in observed light level and reception of a status indication that indicates switching on the light output from a particular other luminaire 120-p taking place within a predefined time window T_{ad}, as indicated in block 308. The adjustment further comprises complementing, in response to identifying a pattern of said kind, the lighting control logic to define switching on the light output from the luminaire 120-k as a response to detecting an occurrence of a reprogrammed triggering condition, wherein the reprogrammed triggering condition comprises receiving a status indication that indicates switching on the light output from the particular other luminaire (120-p), as indicted in block 310. As described in the foregoing, in an example, the reprogrammed triggering condition comprises detecting an increase in observed light level and receiving a status indication that indicates switching on the light output from a particular other luminaire (120-p) within the predefined time window T_{ad}.

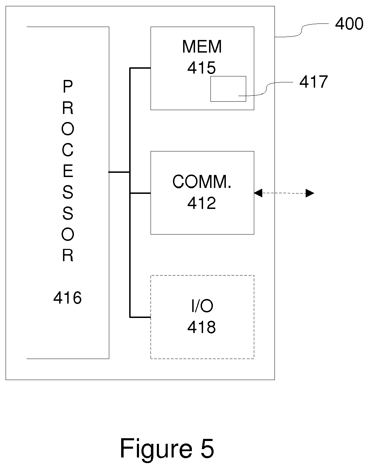

Figure 5 illustrates a block diagram of some components of an exemplifying apparatus 400. The apparatus 400 may comprise further components, elements or portions that are not depicted in Figure 5. The apparatus 400 may be referred to as a computing apparatus and it may be employed e.g. in implementing one or more components of the lighting control device 110-k.

The apparatus 400 comprises a processor 416 and a memory 415 for storing data and computer program code 417. The memory 415 and a portion of the computer program code 417 stored therein may be further arranged to, with the processor 416, to implement at least some of the operations, procedures and/or functions described in the foregoing in context of the lighting control device 110-k.

The apparatus 400 comprises a communication portion 412 for communication with other devices. The communication portion 412 comprises at least one communication apparatus that enables wired or wireless communication with other apparatuses. A communication apparatus of the communication portion 412 may also be referred to as a respective communication means.

The apparatus 400 may further comprise user I/O (input/output) components 418 that may be arranged, possibly together with the processor 416 and a portion of the computer program code 417, to provide a user interface for receiving input from a user of the apparatus 400 and/or providing output to the user of the apparatus 400 to control at least some aspects of operation of the lighting control device 110-k implemented by the apparatus 400. The user I/O components 418 may comprise hardware components such as a display, a touchscreen, a touchpad, an arrangement of one or more keys or buttons, etc. The user I/O components 418 may be also referred to as peripherals. The processor 416 may be arranged to control operation of the apparatus 400 e.g. in accordance with a portion of the computer program code 417 and possibly further in accordance with the user input received via the user I/O components 418 and/or in accordance with information received via the communication portion 412.

Although the processor 416 is depicted as a single component, it may be implemented as one or more separate processing components. Similarly, although the memory 415 is depicted as a single component, it may be implemented as one or more separate components, some or all of which may be integrated/removable and/or may provide permanent / semi-permanent/ dynamic/cached storage.

The computer program code 417 stored in the memory 415, may comprise computer-executable instructions that control one or more aspects of operation of the apparatus 400 when loaded into the processor 416. As an example, the computer-executable instructions may be provided as one or more sequences of one or more instructions. The processor 416 is able to load and execute the computer program code 417 by reading the one or more sequences of one or more instructions included therein from the memory 415. The one or more sequences of one or more instructions may be configured to, when executed by the processor 416, cause the apparatus 400 to carry out at least some of the operations, procedures and/or functions described in the foregoing in context of the lighting control device 110-k.

Hence, the apparatus 400 may comprise at least one processor 416 and at least one memory 415 including the computer program code 417 for one or more programs, the at least one memory 415 and the computer program code 417 configured to, with the at least one processor 416, cause the apparatus 300 to perform at least some of the operations, procedures and/or functions described in the foregoing in context of the lighting control device 110-k.

The computer programs stored in the memory 415 may be provided e.g. as a respective computer program product comprising at least one computer-readable non-transitory medium having the computer program code 417 stored thereon, the computer program code, when executed by the apparatus 400, causes the apparatus 400 at least to perform at least some of the operations, procedures and/or functions described in the foregoing in context of the lighting control device 110-k. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, etc.

## Claims

1. A lighting control device (110-k) for controlling light output from a luminaire (120-k), the lighting control device (110-k) comprising:
a control means for controlling light output from the luminaire (120-k), the control means preprogrammed with a lighting control logic;
a communication means for wireless communication with other lighting control devices (110) that serve to control other luminaires (120), the communication means arranged to receive status indications from the other lighting control devices (110); and
an adaptation means for adjusting the lighting control logic in accordance with received status indications via analysis of a history of status indications received from one or more other lighting control devices,
**characterized in that** the adaptation means is arranged to:
store, into a memory, the history of status indications received from the one or more other lighting control devices and light level indications received from a light sensor arranged to observe light level in a space illuminated by the luminaire (120-k),
analyze the stored status indications and light level indications in an attempt to identify a repeatedly occurring pattern that involves an increase in observed light level and reception of a status indication that indicates switching on the light output from a particular other luminaire (120-p) taking place within a predefined time window, and
reprogram, in response to identifying said repeatedly occurring pattern, the lighting control logic to define switching on the light output from the luminaire (120-k) as a response to detecting an occurrence of a reprogrammed triggering condition, wherein the reprogrammed triggering condition comprises receiving a status indication that indicates switching on the light output from the particular other luminaire (120-p).

2. A lighting control device (110-k) according to claim 1, wherein said reprogrammed triggering condition comprises detecting an increase in observed light level and receiving said status indication that indicates switching on the light output from the particular other luminaire (120-p) within said predefined time window.

3. A lighting control device (110-k) according to claim 1 or 2, wherein the adaptation means is further arranged to reprogram, in response to identifying said repeatedly occurring pattern, the lighting control logic to define switching off the light output from the luminaire (120-k) as a response to receiving a status indication that indicates switching off the light output from said particular other luminaire (120-p) in a situation where the lighting control device (110-k) has switched on the light output from the luminaire (120-k) in response to an occurrence of said reprogrammed triggering condition.

4. A lighting control device (110-k) according to any of claims 1 to 3, wherein said increase in light level exceeds a change threshold and that occurs within a predefined time period.

5. A lighting control device (110-k) according to any of claims 1 to 4, wherein said increase in light level results in a light level the exceeds a predefined light level threshold.

6. A lighting control device (110-k) according to any of claims 1 to 5, wherein the luminaire (120-k) is assigned to a luminaire group (130-m) and wherein said particular other luminaire (120-p) is not assigned to said luminaire group (130-m).

7. A lighting control device (110-k) according to any of claims 1 to 6, wherein a received signal strength indication, RSSI, for a status message in which said status indication that indicates switching on the light output from a particular other luminaire (120-p) exceeds a predefined signal strength threshold.

8. Alighting control device (110-k) according to any of claims 1 to 6, wherein the communication means is arranged to apply a wireless mesh networking and wherein the number of intermediate nodes via which a status message in which said status indication that indicates switching on the light output from a particular other luminaire (120-p) is received is a smaller than a predefined hop threshold.

9. A lighting control device (110-k) according to any of claims 1 to 8, wherein a pattern that involves an increase in observed light level and reception of a status indication that indicates switching on the light output from a particular other luminaire (120-p) taking place within a predefined time window is considered as a repeatedly occurring one in response to said pattern having occurred at least a predefined number of times.

10. A lighting control device (110-k) according to any of claims 1 to 9, wherein a pattern that involves an increase in observed light level and reception of a status indication that indicates switching on the light output from a particular other luminaire (120-p) taking place within a predefined time window is considered as a repeatedly occurring one in response to at least a predefined percentage of receptions of said status indication having been accompanied by an increase in observed light level within the predefined time window.

11. A method for controlling light output from a luminaire (120-k), the method comprising:
controlling light output from the luminaire (120-k) in accordance with a preprogrammed lighting control logic;
receiving status indications from lighting control devices that serve to control other luminaires (120); and
adjusting the lighting control logic in accordance with received status indications via analysis of a history of status indications received from one or more other lighting control devices,
**characterized in that** the adjustment comprises:
storing, into a memory, the history of status indications received from the one or more other lighting control devices and light level indications received from a light sensor arranged to observe light level in a space illuminated by the luminaire (120-k),
analyzing the stored status indications and light level indications in an attempt to identify a repeatedly occurring pattern that involves an increase in observed light level and reception of a status indication that indicates switching on the light output from a particular other luminaire (120-p) taking place within a predefined time window, and
reprogramming, in response to identifying said repeatedly occurring pattern, the lighting control logic to define switching on the light output from the luminaire (120-k) as a response to detecting an occurrence of a reprogrammed triggering condition, wherein the reprogrammed triggering condition comprises receiving a status indication that indicates switching on the light output from a particular other luminaire (120-p).

12. A computer program (417) for controlling light output from a luminaire (120-k), the computer program (317) comprising computer readable program code configured to cause performing at least the method according to claim 11 when said program code is executed on one or more computing apparatuses (400) operatively coupled to said luminaire for controlling the light output and operatively coupled to said lighting control devices for receiving said status indications.

## Patentansprüche

1. Beleuchtungssteuereinrichtung (110-k) zum Steuern von von einer Leuchte (120-k) ausgegebenem Licht, wobei die Beleuchtungssteuereinrichtung (100-k) umfasst:
ein Steuermittel zum Steuern von von der Leuchte (120-k) ausgegebenem Licht, wobei das Steuermittel mit einer Beleuchtungssteuerlogik vorprogrammiert ist;
ein Kommunikationsmittel zur Drahtloskommunikation mit anderen Beleuchtungssteuereinrichtungen (110), die dazu dienen, andere Leuchten (120) zu steuern, wobei das Kommunikationsmittel ausgelegt ist zum Empfangen von Statusanzeigen von den anderen Beleuchtungssteuereinrichtungen (110); und
ein Anpassungsmittel zum Verstellen der Beleuchtungssteuerlogik gemäß empfangener Statusanzeigen über eine Analyse einer Vorgeschichte von von einer oder mehreren anderen Beleuchtungssteuereinrichtungen empfangenen Statusanzeigen,
**dadurch gekennzeichnet, dass** das Anpassungsmittel ausgelegt ist zum:
Speichern, in einem Speicher, der Vorgeschichte von von der einen oder mehreren anderen Beleuchtungssteuereinrichtungen empfangenen Statusanzeigen und von von einem Lichtsensor empfangenen Lichtniveauanzeigen, der ausgelegt ist zum Beobachten eines Lichtniveaus in einem durch die Leuchte (120-k) beleuchteten Raum,
Analysieren der gespeicherten Statusanzeigen und Lichtniveauanzeigen in einem Versuch zum Identifizieren eines wiederholt auftretenden Musters, das eine Zunahme beim beobachteten Lichtniveau und Empfangen einer Statusanzeige beinhaltet, dass das Einschalten der Lichtausgabe von einer bestimmten anderen Leuchte (120-p) anzeigt, das innerhalb eines vordefinierten Zeitfensters stattfindet, und
Neuprogrammieren, als Reaktion auf das Identifizieren des wiederholt auftretenden Musters, der Beleuchtungssteuerlogik zum Definieren des Einschaltens der Lichtausgabe von der Leuchte (120-k) als Reaktion auf das Detektieren eines Auftretens einer neuprogrammierten Auslösebedingung, wobei die neuprogrammierte Auslösebedingung das Empfangen einer Statusanzeige umfasst, die das Einschalten der Lichtausgabe von der bestimmten anderen Leuchte (120-p) anzeigt.

2. Beleuchtungssteuereinrichtung (110-k) nach Anspruch 1, wobei die neuprogrammierte Auslösebedingung das Detektieren einer Zunahme beim beobachteten Lichtniveau und Empfangen der Statusanzeige umfasst, die das Einschalten der Lichtausgabe von der bestimmten anderen Leuchte (120-p) innerhalb des vordefinierten Zeitfensters anzeigt.

3. Beleuchtungssteuereinrichtung (110-k) nach Anspruch 1 oder 2, wobei das Anpassungsmittel weiter ausgelegt ist zum Neuprogrammieren, als Reaktion auf das Identifizieren des wiederholt auftretenden Musters, der Beleuchtungssteuerlogik zum Definieren des Ausschaltens der Lichtausgabe von der Leuchte (120-k) als eine Reaktion auf das Empfangen einer Statusanzeige, die das Ausschalten der Lichtausgabe von der bestimmten anderen Leuchte (120-p) in einer Situation anzeigt, wo die Beleuchtungssteuereinrichtung (110-k) die Lichtausgabe von der Leuchte (120-k) als Reaktion auf ein Auftreten der neuprogrammierten Auslösebedingung eingeschaltet hat.

4. Beleuchtungssteuereinrichtung (110-k) nach einem der Ansprüche 1 bis 3, wobei die Zunahme bei dem Lichtniveau einen Änderungsschwellwert übersteigt und der innerhalb einer vordefinierten Zeitperiode auftritt.

5. Beleuchtungssteuereinrichtung (110-k) nach einem der Ansprüche 1 bis 4, wobei die Zunahme beim Lichtniveau zu einem Lichtniveau führt, das einen vordefinierten Lichtniveauschwellwert übersteigt.

6. Beleuchtungssteuereinrichtung (110-k) nach einem der Ansprüche 1 bis 5, wobei der Leuchte (120-k) eine Leuchtengruppe (130-m) zugewiesen ist und wobei der bestimmten anderen Leuchte (120-p) nicht die Leuchtengruppe (130-m) zugewiesen ist.

7. Beleuchtungssteuereinrichtung (110-k) nach einem der Ansprüche 1 bis 6, wobei eine Empfangssignalstärkenanzeige, RSSI, für eine Statusnachricht, in der die Statusanzeige, die ein Einschalten der Lichtausgabe von einer bestimmten anderen Leuchte (120-p) anzeigt, einen vordefinierten Signalstärkenschwellwert übersteigt.

8. Beleuchtungssteuereinrichtung (110-k) nach einem der Ansprüche 1 bis 6, wobei das Kommunikationsmittel ausgelegt ist zum Anwenden einer Drahtlosgittervernetzung und wobei die Anzahl von Zwischenknoten, über die eine Statusnachricht, in der die Statusanzeige, die ein Einschalten der Lichtausgabe von einer bestimmten anderen Leuchte (120-p) anzeigt, empfangen wird, kleiner ist als ein vorbestimmter Sprungschwellwert.

9. Beleuchtungssteuereinrichtung (110-k) nach einem der Ansprüche 1 bis 8, wobei ein Muster, das eine Zunahme beim beobachteten Lichtniveau und einen Empfang einer Statusanzeige beinhaltet, die ein Einschalten der Lichtausgabe von einer bestimmten anderen Leuchte (120-p) anzeigt, das innerhalb eines vordefinierten Zeitfensters stattfindet, als ein wiederholt auftretendes als Reaktion darauf betrachtet wird, dass das Muster mindestens mit einer vordefinierten Häufigkeit aufgetreten ist.

10. Beleuchtungssteuereinrichtung (110-k) nach einem der Ansprüche 1 bis 9, wobei ein Muster, das eine Zunahme beim beobachteten Lichtniveau und einen Empfang einer Statusanzeige beinhaltet, die ein Einschalten der Lichtausgabe von einer bestimmten anderen Leuchte (120-p) anzeigt, das innerhalb eines vordefinierten Zeitfensters stattfindet, als ein wiederholt auftretendes betrachtet wird, als Reaktion auf mindestens einen vordefinierten Prozentsatz von Empfängen der Statusanzeige, die begleitet worden sind durch eine Zunahme bei einem beobachteten Lichtniveau innerhalb des vordefinierten Zeitfensters.

11. Verfahren zum Steuern einer Lichtausgabe von einer Leuchte (120-k), wobei das Verfahren umfasst:
Steuern einer Lichtausgabe von der Leuchte (120-k) gemäß einer vorprogrammierten Beleuchtungssteuerlogik;
Empfangen von Statusanzeigen von Beleuchtungssteuereinrichtungen, die dem Steuern anderer Leuchten (120) dienen; und
Verstellen der Beleuchtungssteuerlogik gemäß empfangener Statusanzeigen über eine Analyse einer Vorgeschichte von von einer oder mehreren anderen Beleuchtungssteuereinrichtungen empfangenen Statusanzeigen,
**dadurch gekennzeichnet, dass** die Verstellung umfasst:
Speichern, in einem Speicher, der Vorgeschichte von von der einen oder mehreren anderen Beleuchtungssteuereinrichtungen empfangenen Statusanzeigen und von von einem Lichtsensor empfangenen Lichtniveauanzeigen, der ausgelegt ist zum Beobachten eines Lichtniveaus in einem durch die Leuchte (120-k) beleuchteten Raum,
Analysieren der gespeicherten Statusanzeigen und Lichtniveauanzeigen in einem Versuch zum Identifizieren eines wiederholt auftretenden Musters, das eine Zunahme beim beobachteten Lichtniveau und Empfang einer Statusanzeige beinhaltet, dass das Einschalten der Lichtausgabe von einer bestimmten anderen Leuchte (120-p) anzeigt, das innerhalb eines vordefinierten Zeitfensters stattfindet, und
Neuprogrammieren, als Reaktion auf das Identifizieren des wiederholt auftretenden Musters, der Beleuchtungssteuerlogik zum Definieren des Einschaltens der Lichtausgabe von der Leuchte (120-k) als Reaktion auf das Detektieren eines Auftretens einer neuprogrammierten Auslösebedingung, wobei die neuprogrammierte Auslösebedingung das Empfangen einer Statusanzeige umfasst, die das Einschalten der Lichtausgabe von einer bestimmten anderen Leuchte (120-p) anzeigt.

12. Computerprogramm (417) zum Steuern einer Lichtausgabe von einer Leuchte (120-k), wobei das Computerprogramm (317) einen computerlesbaren Programmcode umfasst, der ausgelegt ist zu bewirken, dass mindestens das Verfahren nach Anspruch 11 ausgeführt wird, wenn der Programmcode auf einer oder mehreren Rechenvorrichtungen (400) ausgeführt wird, die operativ an die Leuchte gekoppelt sind zum Steuern der Lichtausgabe und operativ an die Beleuchtungssteuereinrichtungen gekoppelt sind zum Empfangen der Statusanzeigen.

## Revendications

1. Dispositif de commande d'éclairage (110-k) destiné à commander la sortie de lumière d'un luminaire (120-k), le dispositif de commande d'éclairage (110-k) comprenant :
un moyen de commande destiné à commander la sortie de lumière du luminaire (120-k), le moyen de commande étant préprogrammé avec une logique de commande d'éclairage ;
un moyen de communication destiné à une communication sans fil avec d'autres dispositifs de commande d'éclairage (110) qui servent à commander d'autres luminaires (120), le moyen de communication étant conçu pour recevoir des indications de statut provenant des autres dispositifs de commande d'éclairage (110) ; et
un moyen d'adaptation destiné à ajuster la logique de commande d'éclairage en fonction d'indications de statut reçues via l'analyse d'un historique d'indications de statut reçues en provenance d'un ou plusieurs autres dispositifs de commande d'éclairage,
**caractérisé en ce que** le moyen d'adaptation est conçu pour :
stocker, dans une mémoire, l'historique d'indications de statut reçues en provenance des un ou plusieurs autres dispositifs de commande d'éclairage et des indications de niveau de lumière reçues en provenance d'un capteur de lumière conçu pour observer le niveau de lumière dans un espace illuminé par le luminaire (120-k) ,
analyser les indications de statut et les indications de niveau de lumière stockées dans le but d'identifier un schéma survenant répétitivement qui implique une augmentation de niveau de lumière observé et la réception d'une indication de statut qui indique l'allumage de la sortie de lumière d'un autre luminaire particulier (120-p) se déroulant à l'intérieur d'une fenêtre de temps prédéfinie, et
reprogrammer, en réponse à l'identification dudit schéma survenant répétitivement, de la logique de commande d'éclairage pour définir l'allumage de la sortie de lumière du luminaire (120-k) en réponse à la détection d'une survenue d'une condition de déclenchement reprogrammée, la condition de déclenchement reprogrammée comprenant la réception d'une indication de statut qui indique l'allumage de la sortie de lumière de l'autre luminaire particulier (120-p).

2. Dispositif de commande d'éclairage (110-k) selon la revendication 1, ladite condition de déclenchement reprogrammée comprenant la détection d'une augmentation de niveau de lumière observé et la réception de ladite indication de statut qui indique l'allumage de la sortie de lumière de l'autre luminaire particulier (120-p) à l'intérieur d'une fenêtre de temps prédéfinie.

3. Dispositif de commande d'éclairage (110-k) selon la revendication 1 ou 2, le moyen d'adaptation étant en outre conçu pour reprogrammer, en réponse à l'identification dudit schéma survenant répétitivement, la logique de commande d'éclairage pour définir l'extinction de la sortie de lumière du luminaire (120-k) en réponse à la réception d'une indication de statut qui indique l'extinction de la sortie de lumière dudit autre luminaire particulier (120-p) dans une situation où le dispositif de commande d'éclairage (110-k) a allumé la sortie de lumière du luminaire (120-k) en réponse à une survenue de ladite condition de déclenchement reprogrammée.

4. Dispositif de commande d'éclairage (110-k) selon l'une quelconque des revendications 1 à 3, ladite augmentation de niveau de lumière excédant un seuil de changement et, ceci survenant à l'intérieur d'une période de temps prédéfinie.

5. Dispositif de commande d'éclairage (110-k) selon l'une quelconque des revendications 1 à 4, ladite augmentation de niveau de lumière résultant en un niveau de lumière qui excède un seuil de niveau de lumière prédéfini.

6. Dispositif de commande d'éclairage (110-k) selon l'une quelconque des revendications 1 à 5, le luminaire (120-k) étant assigné à un groupe de luminaires (130-m) et ledit autre luminaire particulier (120-p) n'étant pas assigné audit groupe de luminaires (130-m).

7. Dispositif de commande d'éclairage (110-k) selon l'une quelconque des revendications 1 à 6, un indicateur d'intensité de signal reçu, RSSI, pour un message de statut dans lequel ladite indication de statut qui indique l'allumage de la sortie de lumière d'un autre luminaire particulier (120-p) excède un seuil d'intensité de signal prédéfini.

8. Dispositif de commande d'éclairage (110-k) selon l'une quelconque des revendications 1 à 6, le moyen de communication étant conçu pour appliquer un réseau maillé sans fil et le nombre de nœuds intermédiaires, via lesquels un message de statut dans lequel ladite indication de statut qui indique l'allumage de la sortie de lumière d'un autre luminaire particulier (120-p) est reçue, est inférieur à un seuil de bonds prédéfini.

9. Dispositif de commande d'éclairage (110-k) selon l'une quelconque des revendications 1 à 8, un schéma, qui implique une augmentation de niveau lumière observé et la réception d'une indication de statut qui indique l'allumage de la sortie de lumière d'un autre luminaire particulier (120-p) se déroulant à l'intérieur d'une fenêtre de temps prédéfinie, étant considéré comme un schéma survenant répétitivement en réponse au fait que ledit schéma est survenu au moins un nombre prédéfini de fois.

10. Dispositif de commande d'éclairage (110-k) selon l'une quelconque des revendications 1 à 9, un schéma, qui implique une augmentation de niveau de lumière observé et la réception d'une indication de statut qui indique l'allumage de la sortie de lumière d'un autre luminaire particulier (120-p) se déroulant à l'intérieur d'une fenêtre de temps prédéfinie, étant considéré comme un schéma survenant répétitivement en réponse au fait qu'au moins un pourcentage prédéfini de réceptions de ladite indication de statut a été accompagné d'une augmentation de niveau de lumière observé à l'intérieur de la fenêtre de temps prédéfinie.

11. Procédé de commande de la sortie de lumière d'un luminaire (120-k), le procédé comprenant :
la commande de la sortie de lumière du luminaire (120-k) en fonction d'une logique de commande d'éclairage préprogrammée ;
la réception d'indications de statut provenant de dispositifs de commande d'éclairage qui servent à commander d'autres luminaires (120) ; et
l'ajustement de la logique de commande d'éclairage en fonction des indications de statut reçues via une analyse d'un historique d'indications de statut reçues d'un ou plusieurs autres dispositifs de commande d'éclairage,
**caractérisé en ce que** l'ajustement comprend :
le stockage, dans une mémoire, de l'historique d'indications de statut reçues des un ou plusieurs autres dispositifs de commande d'éclairage et d'indications de niveau de lumière reçues d'un capteur de lumière conçu pour observer le niveau de lumière dans un espace illuminé par le luminaire (120-k),
l'analyse des indications de statut et des indications de niveau de lumière stockées dans le but d'identifier un schéma survenant répétitivement qui implique une augmentation de niveau de lumière observé et la réception d'une indication de statut qui indique l'allumage de la sortie de lumière d'un autre luminaire particulier (120-p) se déroulant à l'intérieur d'une fenêtre de temps prédéfinie, et
la reprogrammation, en réponse à l'identification dudit schéma survenant répétitivement, de la logique de commande d'éclairage pour définir l'allumage de la sortie de lumière du luminaire (120-k) en réponse à la détection d'une survenue d'une condition de déclenchement reprogrammée, la condition de déclenchement reprogrammée comprenant la réception d'une indication de statut qui indique l'allumage de la sortie de lumière d'un autre luminaire particulier (120-p).

12. Programme informatique (417) destiné à commander la sortie de lumière d'un luminaire (120-k), le programme informatique (317) comprenant un code de programme lisible par ordinateur configuré pour amener la réalisation d'au moins le procédé selon la revendication 11 lorsque ledit code de programme est exécuté sur un ou plusieurs appareils informatiques (400) couplés de manière fonctionnelle audit luminaire pour commander la sortie de lumière et couplé de manière fonctionnelle auxdits dispositifs de commande d'éclairage pour recevoir lesdites indications de statut.
